Europäisches Patentamt

European Patent Office

Office européen des brevets

(11) Publication number: **0 135 702**
**B1**

# EUROPEAN PATENT SPECIFICATION

(45) Date of publication of patent specification: 17.08.88

(21) Application number: **84108746.3**

(22) Date of filing: **24.07.84**

(51) Int. Cl.⁴: **A 01 D 34/63, A 01 D 69/00**

54 Belt transmission for a power lawn-mower.

(30) Priority: **25.07.83 SE 8304121**

43 Date of publication of application:
**03.04.85 Bulletin 85/14**

(45) Publication of the grant of the patent:
**17.08.88 Bulletin 88/33**

(84) Designated Contracting States:
**AT BE CH DE FR GB IT LI LU NL SE**

58 References cited:
**DE-A-1 923 779**
**DE-C- 70 577**
**FR-A-2 268 998**
**GB-A-1 337 930**
**SE-B- 385 079**
**US-A-3 367 459**
**US-A-4 128 017**

73 Proprietor: **DAHLMANS KLIPPO AB**
**Knivgatan 3-5**
**S-212 28 Malmö (SE)**

72 Inventor: **Dahlman, Karl**
**21, Rue de Taulis**
**F-66000 Perpignan (FR)**

74 Representative: **Asketorp, Göran P. et al**
**Lars Holmqvist Patentbyra AB Box 4289**
**S-203 14 Malmö 4 (SE)**

Courier Press, Leamington Spa, England.

## Description

The present invention relates to a power lawn-mower of the principal construction described in the Swedish patent specification SE—B—7313735-8 corresponding to GB—A—1 766 903.

The previously known lawn-mower according to said patent specification comprises a belt transmission between the drive engine and the front wheel shaft, whereby the front wheels are driven.

Such a belt transmission operates very well for this type of lawn-mower. By means of a simple hand grip, the transmission is changed from driving operation to idling.

However, there is a need for a transmission which allows more than one speed for the lawn-mower. At the mowing of an easy lawn having not too high grass, the higher driving speed may be desired.

If the previously known transmission shall be used for lawnmowers having different rotor diameter, there is required different transmissions for each model or size. Thus, a comparatively large spare part stock is required. It is desired to have a single transmission, which is adjustable to lawn-mower of different sizes.

The object of the present invention is to provide a transmission for a lawn-mower, which has more than one transmission ratio.

Another object of the present invention is to provide a belt transmission which is adaptable to lawn-mowers of different sizes having different distances between the drive shaft of the engine and the shaft of the driven wheel.

Thus, according to the present invention there is provided a belt transmission for a lawn-mower having a drive engine and a driven wheel positioned on a shaft. The transmission comprises a pulley, splined to the output shaft of the drive engine, a driven pulley adapted to be mounted on the wheel, a drive belt trained between the pulleys and a belt tensioning assembly having three distinct positions. The belt tensioning assembly is biased by a shackle spring and is movable between a first disengaged position, in which the belt is free from cooperation with the pulleys, and a second drive position, in which the belt drivingly cooperates with the pulleys, the transmission being enclosed by a gap.

According to the invention, the transmission cap is divided into two pivotally interconnected portions. The portions form an angle in relation to each other. The pulleys are positioned one at each end of the cap spaced from the joint position. Any change in the distance between the shafts of the pulleys is accommodated by changing the angle between the cap portions. One of the driven or driving pulley is a variator pulley having variable diameter and the belt tensioning assembly is movable to a third position in which the variator pulley has a smaller diameter than in the first and second positions.

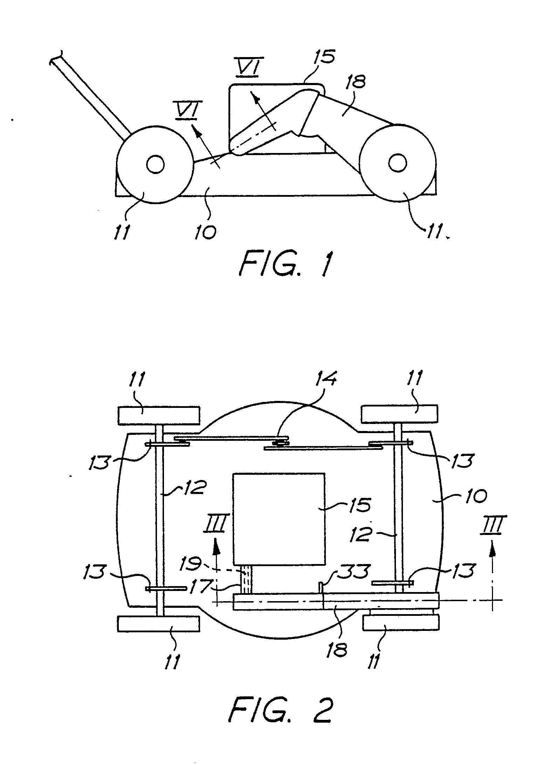

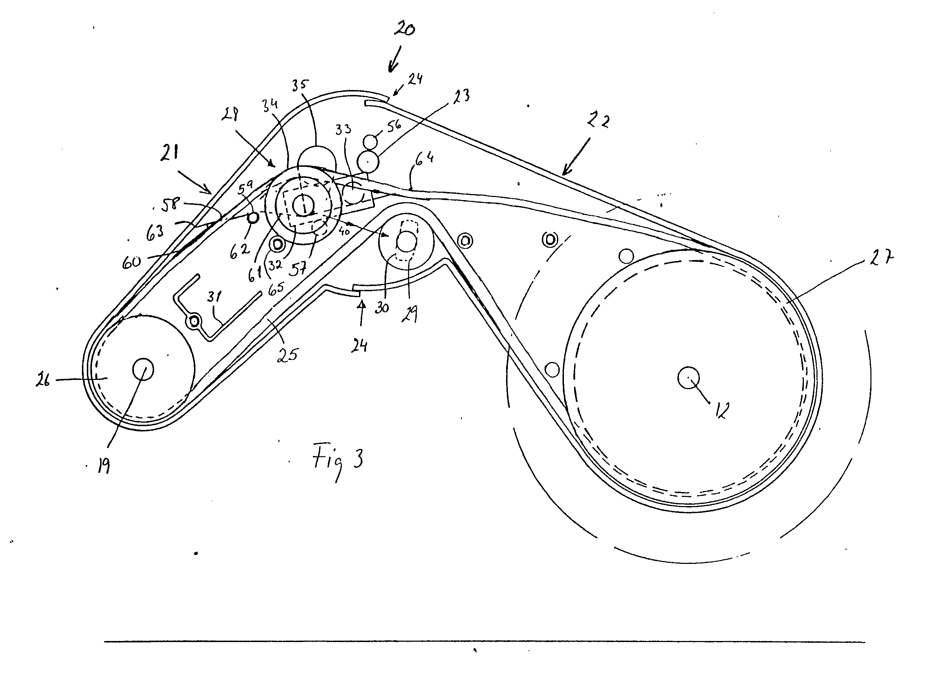

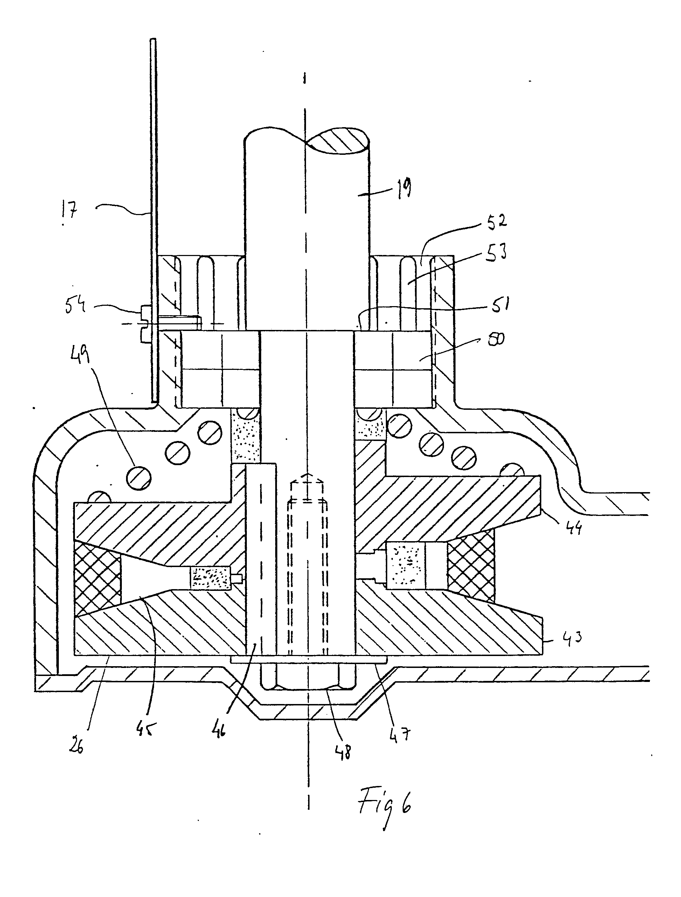

Further objects, advantages and features of the invention will appear from the description given below of a preferred embodiment of the invention with reference to the appended drawings. Fig. 1 is a side view of a lawn-mower equipped with a belt transmission according to the invention. Fig. 2 is a plan view of the lawn-mower according to Fig. 1. Figs. 3, 4 and 5 are cross-sectional views through the belt transmission of Fig. 1 taken according to the line III—III of Fig. 2 and show the transmission in the disengaged position, normal high speed and low speed, respectively. Fig. 6 is a cross section taken according to the line VI—VI of Fig. 1 and in an enlarged scale.

In Fig. 1 there is shown a lawn-mower according to the invention comprising a rotor cap 10 enclosing a rotor having knives for cutting the grass, and an internal combustion engine 15, which drives the rotor. Four wheels 11, three nondriven and one driven, are adapted on two shafts 12, which are supported by levers 13. The levers 13 are pivotably journalled in the rotor cap 10 and are interconnected by a link system 14, so that the height of the wheel shafts and thus the mowing height is adjustable. The engine 15 is elastically supported on the rotor cap and is directly connected to the rotor. Moreover, the engine has a second output shaft 19 for powering the lawn-mower as described more in details below. A belt transmission 18 is adapted between the output shaft 19 of the engine 15 and one of the front wheels 11. A protection sleeve 17 surrounds the output shaft 19.

The belt transmission 18 is shown in cross-section in Figs. 3 to 5. The transmission is enclosed by a cap 20 divided into two portions, a first portion 21 positioned closest to the engine 15 and a second portion 22 positioned towards the driven wheel 11. The first and the second portion are pivotally interconnected by means of a pin 23, or similar. The second portion 22 is placed inside the first portion at the overlapping portion 24 as shown in Fig. 3. The cap portions 21 and 22 can thus be pivoted in relation to each other at least in a limited degree.

A drive belt 25 is trained inside the transmission on a drive pulley 26 and a driven pulley 27. The driven pulley 27 is directly connected to the driven wheel or is integrally shaped with the wheel. The drive pulley 26 is connected to the output shaft 19 of the engine 15 as described in details below by reference to Fig. 6.

In the cap 20 there is provided a belt tensioning assembly generally designated 28. Furthermore, there is provided a belt tensioning roll 29, which simply can be a ball bearing, the outer member of which constitutes a rolling surface for the backside of the drive belt. The roller 29 is movable in a slit 30 and is locked in a suitable position for pretensioning the belt 25.

Moreover, there is a pocket 31 in the cap essentially for collecting entering grass or other contaminants.

The belt tensioning assembly 28 comprises a lever 32, which is pivotably journalled on a shaft pin 33. As is shown in Fig. 2, the shaft pin 33 extends through the cap 20. The pin 33 may be provided with an outer lever connected to a control rod for operation from the drive position (not shown).

The lever 32 is fixed to the shaft pin 33 and rotates together with the pin. The outer end of the lever comprises an idling pulley 34. The lever 32 is biased by a shackle spring 35 and can reach three distinct positions shown in Fig. 3, 4 and 5, respectively.

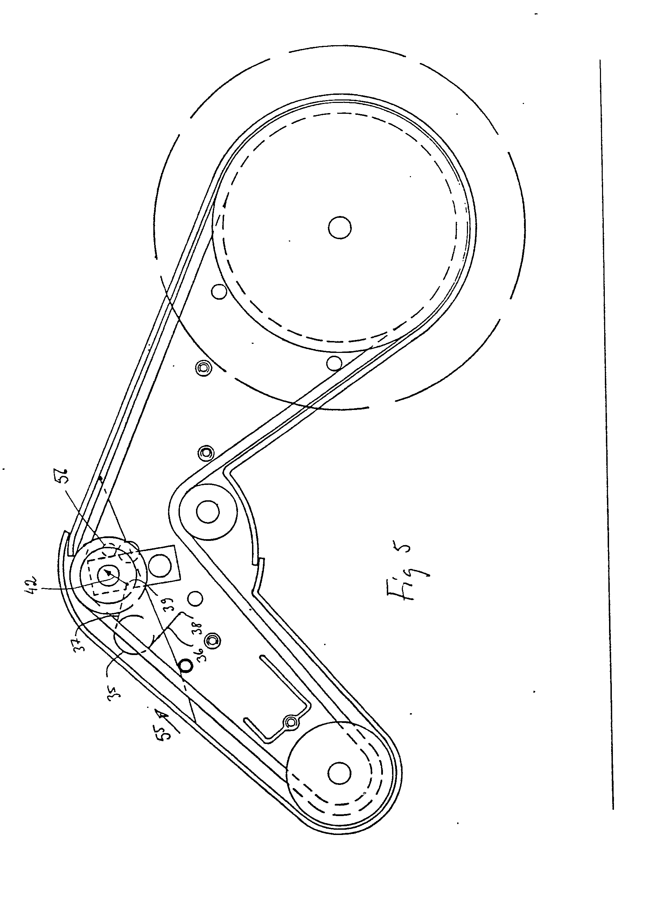

The shackle spring 35 has two legs 36 and 37 connected between a first fixed point 38 in the cap 20 and a second fixed point 39 of the lever 32 as shown in Fig. 5. The shackle spring is adapted to excert an upwardly directed force between the points 38 and 39, i.e. a force to the right from the point 39 as shown by an arrow 40 of Fig. 3.

Since the force 40 is directed below the shaft pin 33 seen according to Fig. 3, the lever 32 is biased anti-clockwise in the disengaged position according to Fig. 3, into abutment with a lower end stop 57. The belt 25 is comparatively slack in this position and the driven pulley 27 is disengaged.

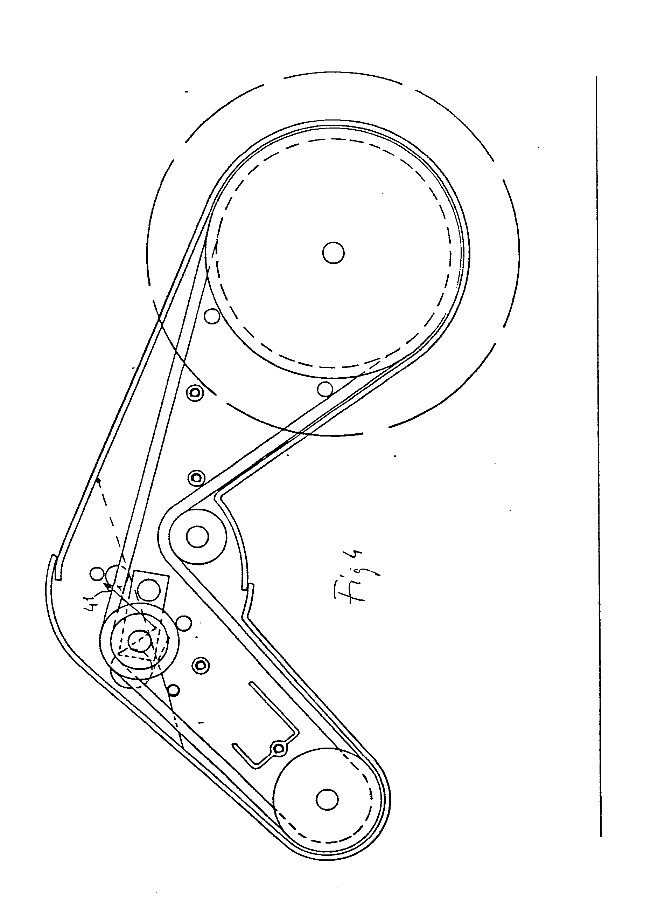

If the shaft pin 33 and the lever 32 is pivoted clockwise by means of suitable means to the position shown in Fig. 4, the direction of the force 30 will change. The lever 32 will pass over a dead point, whereupon the force 40 generates a torque directed clockwise as shown by the arrow 41 of Fig. 4. The force and the perpendicular distance to the shaft pin 33 determines the torque, by which the pulley 34 will tension the belt 25 in this position. The spring 35 is dimensioned so that the drive pulley 26 and the driven pulley 27 cooperates with the belt 25 and the lawn-mower is powered. The belt tension can also be adjusted by means of the roll, which is placed in a suitable fixed position in the slit 30.

Fig. 6 is a cross-section through the drive pulley 26. The drive pulley comprises two discs 43 and 44 facing each other and provided with key-shaped portions 45, which cooperates to form a groove which receives the drive belt 25. The first and the second disc 43 and 44 are connected to the output shaft I of the engine by means of splines 46 and rotates together with the shaft 19, but are axially movable along the shaft 19. The first outer disc 43 is prevented from moving outwards or downwards in Fig. 6 by means of a washer 47 and a screw 48. The second inner disc 44 is biased outwards by means of a strong spring 49 and has normally the position shown in the left side of Fig. 6. In this position, the V-belt cooperates with the key-shaped portions 45 close to the outer diameter as shown to the left in Fig. 6. The strength of the spring 49 and the transmission ratio due to the key-shaped surfaces 45 is so great that the force 41 of the lever 32 can not force the belt 25 further into the groove.

At its upper position, the spring 49 rests towards a ball bearing 50, which in turn abuts a shoulder 51 of the drive shaft 19. The ball bearing 50 is positioned in a round recess 52 of the cap 20. The recess is internally provided with ridges 53.

The ball bearing is pressed inside the recess 52 and deforms the ridges to the correct dimensions in order to rigidly retain the ball bearing. Two screws 54 retains the ball bearing. The screw 54 also attach the protection sleeve 17 to the cap 20.

If a sufficiently great tension arises in the drive belt 25, it will force the second disc 44 upwards in Fig. 6 by key action to the position shown to the right in Fig. 6, whereby the drive belt will cooperate with the pulley 26 at a smaller diameter. Thus, the pulley 27 and the wheel 11 are driven by a lower speed. This construction of the drive pulley 26 is a commonly known variator construction.

In Fig. 5, the lever 32 has been pivoted further clockwise to a third position which is exactly beyond the dead position, in which the resultant of the tensioning force of the belt passes through the shaft pin 33. In this position, the belt 25 is tensioned so heavily that the disc 44 of the pulley 26 is moved upwards in Fig 6 opposite the bias of the spring 49, and the spring 35 is almost without any influence. Thus, a lower speed transmission is achieved, which is called "low speed". Since the drive belt 25 moves in the direction of the arrow 55, the movement of the drive belt will positively keep the lever 32 in the position shown. A stop pin 56 prevents the lever 32 from moving further to the right in Fig. 5.

From the above description it is evident that a transmission having two different speeds is provided, viz. high speed and low speed.

As is shown in Fig. 3, the transmission is journalled around a pin 23. Thus, the distance between the shafts I and 12 may differ, and the belt transmission is adjustable to lawn-mowers of different sizes, having rotor diameters of e.g. 19" and 21". The belt transmission is also usable at lawn-mowers of different manufactures, which can have different distances between the shafts 19 and 12. Said adjustability also absorbs variations in the shaft distance which may arise during the height adjustment of the lawn-mower.

In the position shown in Fig. 3, i.e. the disengaged position, it is important that the belt does not engage the pulleys 26 and 27 and that the belt does not leave the pulley 34 too far, which could result in the belt muddling.

For this reason there is provided a belt control spring 58, which has a coil portion 59 and a short leg 60 and a long leg 61. The coil portion 59 is positioned around a pin 62, which is fixed inside the cap. The short leg 60 abuts the side edge of the cap at 63. The long leg 61 extends below the shaft pin of the pulley 34, and is bent upwards after passing beyond the belt 25 backside the belt. The portion bent around the belt is designated 64. In the position shown in Fig. 3, the portion 64 retains the belt close to the groove of the pulley 34.

When the lever 32 is pivoted clockwise, the leg 61 moves upwards and abuts the upper side edge of the cap, and the spring is out of the way for the belt both in normal high speed and low speed. Thus, the belt control spring is only operating when the lever is in its lowermost, disengaged position. In all other positions, the belt control spring is pressed towards the upper side edge of the cap by its own force.

When the belt control spring is in operation in the disengaged position, the spring presses the belt downwards to the best disengaged position at the same time as the belt is braked and retained in the belt tensioning pulley.

It is of course also possible to use other means than the spring 58 for achieving said operation and the spring 58 may be dispensed with in some embodiments.

From the above description it is evident that a transmission having the desired properties has been provided. Experiments have shown that it operates very safely and reliable. The variator pulley is a well-known and well-tried construction having few parts which may wear. The belt transmission is very unsensitive and very suitable for the present construction.

In the disengaged position, the belt 25 tends to achieve a position having as great radius as possible due to the inherent stiffness of the belt. Thus, the drive belt 25 abuts the side edge of the cap around the drive pulley 26 in the position shown in Fig. 3, whereupon the driving cooperation between the drive pulley and the drive belt effectively is prevented. The belt control spring guides the belt to said position and positively operates for forcing the belt from the pulleys towards the cap. In this way full control of the drive belt is achieved also in the disengaged position.

By the order between the different positions—disengaged, normal high speed and low speed—certain advantages are achieved. At normal high speed the balanced spring force is used for tensioning the drive belt. Said balancing force cannot separate the discs of the variator pulley. In this position, the losses in a variator pulley are as small as possible, which is used during normal operation.

At low speed, the losses in the pulley are greater, which however is no severe drawback, since the increase in the transmission ratio means that the torque transmitted to the wheel is greater than at normal high speed. Said drawback may be avoided by a spring 4, which is regressive.

Since the belt tensioning assembly 28 and the roller 29 are positioned between the pulleys 26 and 27 it is possible to arrange the cap portions 21 and 22 pivotably interconnected so that the distance between the shafts 19 and 12 can be adjusted within certain limits as described above. This combination gives a belt transmission having properties which are superior compared to previously known transmissions for lawn- mowers regarding operational possibilities and reliability. Moreover, the transmission is cheap to manufacture and maintain. Since the same transmission can be used for different types of lawn- mowers having different sizes, the stock keeping of spare parts will be more easy and cheaper.

. At the transmission according to Figs. 3 to 5 another advantage is achieved, viz. that the transmission automatically change over to low speed if the lawn-mower is loaded beyond the normal, e.g. if someone stands on the machine, which takes place in the following way. The drive power from the engine is transmitted to the drive wheel through the variator pulley 26 and the lower part of the belt 25 to the pulley 27. The upper part of the belt 25 is relatively slack and is tensioned merely by the belt tensioning assembly 28, which maintains enough friction for the driving. If the pulley 27 is braked, said brake force is transmitted directly to the variator pulley 26 through the lower part of the belt 25. If said brake force together with the force from the belt tensioning assembly 28 is sufficiently great for overcoming the force of the spring 49, the variator disc 44 will move upwards in Fig. 6. At the same time the upper part of the belt 25 is slacked, which means that the belt tensioning assembly 28 pivots clockwise biased by the shackle spring 35. Finally the position shown in Fig. 5 is achieved, i.e. low speed.

It should be noted that in the position low speed it is essentially the spring 49 of the variator pulley, which provides the belt tension while the lever 32 of the belt tensioning assembly 28 rests against the stop pin 56.

From Fig. 3 it appears that the pulley 34 of the belt tensioning assembly 2B rests towards the pin 65 in the disengaged position. Thus, the pulley 34 remains still and the pulley prevents the belt 25 from moving under eventuell influence of the pulley 26.

Different modifications of the transmission described are possible within the scope of the present invention. E.g. the driven pulley 27 can be shaped as a variator pulley instead of the motor shaft pulley 26. If so, the drive speed will increase in the third position. It is possible to achive different speeds between the two end positions by maintaining the lever 32 in an intermediate position if this is desired. By having the transmission pivotable, the engine may be elastically suspended. The invention is only limited by the appended patent claims.

## Claims

1. Belt transmission for a power lawn-mower having a drive engine (15) and a driven wheel (11) positioned on a shaft (12), comprising a pulley (26) adapted to be mounted on the output shaft (19) of the drive engine, a driven pulley (27) adapted to be mounted on the wheel (11), a drive belt (25) mounted between the pulleys (26, 27) and a belt tensioning assembly (28), which is movable under influence of a shackle sprnig (35), between a first disengaged position, in which the belt is free from cooperation with said pulleys, and a second driving position, in which the belt drivingly cooperates with said pulleys, the transmission being enclosed by a cap (20), characterized in that the cap is made of two pivotably interconnected portions (21, 22) said pulleys (26, 27) being placed close to the free end of each portion, respectively any change in the distance between the shafts (19, 12) of the pulleys being accommodated by changing the angle position between the two portions (21, 22); in that one of the driven or the driving pulley (26, 27) is a variator pulley having variable diameter in response to the tension in the belt; and in the belt tensioning assembly (28) is movable to a third position, in which the variator pulley has a smaller diameter than in the first and second positions.

2. Belt transmission according to claim 1, characterized in that the variator pulley (26) is adapted at the output shaft (19) and in that the belt tensioning assembly (28) is consecutively movable between the three positions in the order disengaged position, normal high speed and low speed; and in that the transmission is adapted to automatically change over to low speed at increase load on the transmission.

3. Belt transmission according to claims 1 or 2, characterized by a belt control spring (58), which in the disengaged position is adapted to maintain the belt close to a pulley (34) of the belt tensioning assembly (28) and in the two remaining positions to be free from the belt.

## Patentansprüche

1. Riemenantrieb einer Rasenmähmaschine versehen mit einem Antriebmotor (15) und einem an einer Achse (12) angeordneten getriebenen Rad (11), welcher Riemenantrieb eine zum Anordnen an einer Kraftabgabewelle (19) des Antriebsmotors bestimmte Riemenscheibe (26), eine zum Anordnen am Rad (11) bestimmte getriebene Riemenscheibe (27), einen zwischen den Riemenscheiben (26, 27) angeordneten Antriebsriemen (25) und eine Riemenspannvorrichtung (28) umfasst, die, von einem Federbügel (35) beeinflusst, zwischen einer ersten Ausschaltstellung, in der der Riemen von den Riemenscheiben unbeeinflusst bleibt, und einer zweiten Antriebslage, in der der Riemen mit den erwähnten Riemenscheiben antreibend zusammenwirkt, beweglich ist, wobei der Riemenantrieb von einer Kappe (20) umschlossen ist, dadurch gekennzeichnet, dass die Kappe aus zwei unter einander drehbar verbundenen Teilen (21, 22) besteht, wobei die erwähnten Riemenscheiben (26, 27) neben dem freien Ende jedes Teils angeordnet sind, und jede Abstandsänderung zwischen den Achsen (19, 12) der Riemenscheiben durch Anderung der Winkellage zwischen den zwei Teilen (21, 22) angepasst wird; dass eine der getriebenen oder der antreibenden Riemenscheibe (26, 27) eine verstellbare Riemenscheibe mit veränderlichem Kreisdurchmesser im Verhältnis zur Riemenspannung ist; und dass die Riemenspannvorrichtung (28) in eine dritte Lage beweglich ist, in der die verstellbare Riemenscheibe einen niedrigeren Durchmesser als in den ersten und zweiten Lagen hat.

2. Riemenantrieb gemäss Anspruch 1, dadurch gekennzeichnet, dass die verstellbare Riemenscheibe (26) an der Kraftabgabewelle (19) angeordnet ist, und dass die Riemenspannvorrichtung (28) nacheinander zwischen den drei Lagen, und zwar in der Reihenfolge Ausschaltstellung, Normalgeschwindigkeit und herabgesetzter Geschwindigkeit verstellbar ist; und dass der Antrieb zur automatischen Herabsetzung der Geschwindigkeit bei zunehmender Belastung am Riemenantrieb eingerichtet ist.

3. Riemenantrieb gemäss Ansprüche 1 und 2, durch eine Riemenkontrollfeder (58) gekennzeichnet, die in der Ausschaltstellung zur Festhaltung des Riemens an einer Riemenscheibe (34) der Riemenspannvorrichtung (28) angeordnet ist, und in den zwei übrigen Lagen von dem Riemen frei liegt.

## Revendications

1. Transmission à courroie pour tondeuse à gazon tractée comportant un moteur d'entraînement (15) et une roue entraînée (11) montée sur un arbre (12), comprenant une poulie (26) prévue pour être montée sur l'arbre de sortie (19) du moteur d'entraînement, une poulie entraînée (27) prévue pour être montée sur la roue (11), une courroie d'entraînement (25) montée entre les poulies (26, 27) et un dispositif (28) de tension de courroie, qui est mobile sous l'influence d'un ressort à boucle (35) entre une première position dégagée, dans laquelle la courroie ne coopère pas avec lesdites poulies, et une deuxième position d'entraînement, dans laquelle la courroie coopère en entraînement avec lesdites poulies, la transmission étant enfermée dans un capot (20), caractérisée en ce que le capot est constitué de deux parties (21, 22) interconnectées de façon pivotante, lesdites poulies (26, 27) étant placées près de l'extrémité libre de chaque partie, respectivement, tout changement de la distance entre les arbres (19, 12) des poulies étant compensé par le changement de la position angulaire entre les deux parties (21, 22); en ce qu'une des poulies entraînée ou d'entraînement (26, 27) est une poulie de variateur dont le diamètre varie en réponse à la tension de la courroie; et en ce que le dispositif de tension de courroie (28) est mobile à une troisième position, dans laquelle la poulie de variateur a un diamètre plus petit que dans les première et deuxième positions.

2. Transmission à courroie suivant la revendication 1, caractérisée en ce que la poulie de variateur (26) est montée sur l'arbre de sortie (19); en ce que le dispositif de tension de courroie (28) est déplaçable consécutivement entre les trois positions dans l'ordre, c'est-à-dire position dégagée, grande vitesse normale et petite vitesse; et en ce que la transmission est prévue pour passer automatiquement en petite vitesse pour une charge accrue sur la transmission.

3. Transmission à courroie suivant la revendication 1 ou 2, caractérisée par un ressort (58) de contrôle de la courroie qui est prévu, dans la position dégagée, de manière à maintenir la courroie près d'une poulie (34) du dispositif de tension de courroie (28) et, dans les deux autres positions, de manière à être dégagé de la courroie.

FIG. 1

FIG. 2

Fig 3

0 135 702

Fig 4

41

Fig 5

Fig 6